(19) Europäisches Patentamt
European Patent Office
Office européen des brevets

(11) **EP 4 260 939 A1**

(12) **EUROPEAN PATENT APPLICATION**
published in accordance with Art. 153(4) EPC

(43) Date of publication:
**18.10.2023 Bulletin 2023/42**

(21) Application number: **21903845.2**

(22) Date of filing: **08.12.2021**

(51) International Patent Classification (IPC):
**B01J 37/02** (2006.01)    **B01J 23/84** (2006.01)
**B01J 23/881** (2006.01)    **B01J 23/882** (2006.01)
**B01J 23/883** (2006.01)    **B01J 23/847** (2006.01)
**C01B 32/162** (2017.01)

(52) Cooperative Patent Classification (CPC):
**B01J 23/84; B01J 23/847; B01J 23/881;**
**B01J 23/882; B01J 23/883; B01J 37/02;**
**C01B 32/162**

(86) International application number:
**PCT/KR2021/018551**

(87) International publication number:
**WO 2022/124799 (16.06.2022 Gazette 2022/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.12.2020 KR 20200173605**

(71) Applicant: **Lg Chem, Ltd.**
**Seoul 07336 (KR)**

(72) Inventors:
• **KIM, Sung Jin**
**Daejeon 34122 (KR)**

• **KIM, Se Hyun**
**Daejeon 34122 (KR)**
• **PARK, Hyun Woo**
**Daejeon 34122 (KR)**
• **CHOI, Jung Ho**
**Daejeon 34122 (KR)**
• **KANG, Hyun Joon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SUPPORTED CATALYST FOR MANUFACTURING CARBON NANOTUBE**

(57)    The present invention relates to a supported catalyst for producing carbon nanotubes which includes a carrier having a number average particle size ($D_{MN}$) of 1.5 um to 20 $\mu$m, and an active ingredient supported in the carrier, wherein the active ingredient which prevents the aggregation between particles and supports the particles may act as an active ingredient, so that it is possible to provide a supported catalyst which has excellent activity, and thus, which may improve the production yield.

EP 4 260 939 A1

**Description**

## TECHNICAL FIELD

### Cross-reference to Related Applications

This application claims the benefit of Korean Patent Application No. 10-2020-0173605, filed on December 11, 2020, in the Korean Intellectual Property Office, the disclosure of which is incorporated herein in its entirety by reference.

### Technical Field

The present invention relate to a supported catalyst for producing carbon nanotubes, and a method for producing carbon nanotubes using the supported catalyst.

## BACKGROUND ART

A carbon nanomaterial may be divided into fullerene, a carbon nanotube (CNT), graphene, a graphite nanoplate, and the like according to the shape of the material, and among the above, the carbon nanotube is a macromolecule in which the surface of hexagonal honeycomb-shaped graphite in which one carbon atom is bonded to three other carbon atoms is roundly rolled to a nano-sized diameter.

The carbon nanotube is hollow, and thus, is lightweight, and has electrical conductivity as good as that of copper, thermal conductivity as excellent as that of diamond, and tensile strength as good as that of steel. According to the rolled-shape thereof, the carbon nanotube may be divided into a single-walled carbon nanotube (SWCNT), a multi-walled carbon nanotube (MWCNT), and a rope carbon nanotube.

In recent years, research on carbon nanotube synthesis techniques capable synthesizing a large amount of carbon nanotubes at a time is actively underway, and among various methods, thermochemical vapor deposition using a fluidized bed reactor has been particularly preferred in that it is possible to easily synthesize a large amount of carbon nanotubes continuously.

In the synthesis of such carbon nanotubes, the yield of carbon nanotubes produced with respect to the amount of a catalyst used should be increased to reduce the production cost and increase the productivity, and therefore, a method of increasing the activity of a catalyst by increasing the amount of active ingredients supported in a carrier is being typically applied. However, in the case of increasing the loading amount of active ingredients, when a predetermined amount or more of active ingredients is supported, there is a problem in that sintering occurs between the active ingredients in the process of producing a supported catalyst, so that the activity of the catalyst is reduced.

Therefore, there is a need for additional research on a supported catalyst for producing carbon nanotubes, which is capable of maximizing the production efficiency of carbon nanotubes by optimizing the loading amount of active ingredients.

### Prior Art Document

(Patent Document 1) KR 10-2010-0074002 A

## DISCLOSURE OF THE INVENTION

## TECHNICAL PROBLEM

An aspect of the present invention provides a supported catalyst for producing carbon nanotubes, which is capable of increasing the synthesis yield of carbon nanotubes by maximizing the loading amount of active ingredients while optimizing the loading efficiency of the active ingredients.

## TECHNICAL SOLUTION

According to an aspect of the present invention, there is provided a supported catalyst for producing carbon nanotubes.

(1) The present invention provides a supported catalyst for producing carbon nanotubes which includes a carrier having a number average particle size ($D_{MN}$) of 1.5 um to 20 $\mu$m, and an active ingredient supported in the carrier.

(2) In the (1), the present invention provides a supported catalyst for producing carbon nanotubes, wherein the number average particle size of the carrier is 4.0 um to 20 $\mu$m.

(3) In the (1) or (2), the present invention provides a supported catalyst for producing carbon nanotubes, wherein the number average particle size of the carrier is 4.0 to 19 $\mu$m.

(4) In any one of the (1) to (3), the present invention provides a supported catalyst for producing carbon nanotubes, wherein the active ingredient is included in an amount of 5 wt% to 30 wt% based on the total weight of the supported catalyst for producing carbon nanotubes.

(5) In any one of the (1) to (4), the present invention provides a supported catalyst for producing carbon nanotubes, wherein the active ingredient includes a main catalyst component and a co-catalyst component, and the molar ratio of the main catalyst component to the co-catalyst component is 10:0.1 to 10:10.

(6) In any one of the (1) to (5), the present invention provides a supported catalyst for producing carbon nanotubes, wherein the main catalyst component is one or more selected from nickel, cobalt, and iron.

(7) In any one of the (1) to (6), the present invention provides a supported catalyst for producing carbon nanotubes, wherein the co-catalyst component is one or more selected from molybdenum and vanadium.

(8) In any one of the (1) to (7), the present invention provides a supported catalyst for producing carbon nanotubes, wherein the supported catalyst is used in the production of bundle-type carbon nanotubes.

(9) The present invention provides a method for producing carbon nanotubes, the method including injecting the supported catalyst for producing carbon nanotubes according to any one of the (1) to (8), and carbon nanotubes for a bed into a fluidized bed reactor, and supplying a carbon source gas and a flowing gas to the fluidized bed reactor and then reacting the carbon source gas and the flowing gas to produce carbon nanotubes.

(10) In the (9), the present invention provides a method for producing carbon nanotubes, wherein the carbon nanotubes are bundle-type carbon nanotubes.

## ADVANTAGEOUS EFFECTS

A supported catalyst for producing carbon nanotubes of the present invention is excellent in catalytic activity since the loading amount of active ingredients is optimized according to the selection of a carrier, thereby increasing the effective amount of the active ingredients, and accordingly, the production volume of produced carbon nanotubes with respect to the input amount of a catalyst may be increased.

## MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term 'carbon nanotube' used in the present invention refers to a secondary structure in which carbon nanotube units are assembled to form a bundle in whole or in part, and the carbon nanotube unit has a graphite surface in a cylindrical shape of a nano-sized diameter, and has a sp2 bonding structure. At this time, depending on the angle and structure in which the graphite sheet is rolled, conductor properties or semiconductor properties may be exhibited. Depending on the number of bonds forming a wall, a carbon nanotube unit may be classified into a single-walled carbon nanotube (SWCNT), a double-walled carbon nanotube (DWCNT), and a multi-walled carbon nanotube (MWCNT), and the thinner the wall, the lower the resistance.

A carbon nanotube of the present invention may include one or two or more of a single-walled carbon nanotube unit, a double-walled carbon nanotube unit, and a multi-walled carbon nanotube unit.

### Supported catalyst for producing carbon nanotubes

According to an embodiment of the present invention, there is provided a supported catalyst for producing carbon nanotubes which includes a carrier having a number average particle size ($D_{MN}$) of 1.5 $\mu$m to 20 um, and an active ingredient supported in the carrier.

The supported catalyst of the present invention selects a carrier having a specific particle size, so that the effective amount of an active ingredient supported may be increased, and thus, the amount of carbon nanotube produced with respect to the amount of a catalyst used may be significantly increased.

The supported catalyst for producing carbon nanotubes according to an embodiment of the present invention is particularly suitable to be used in the production of a bundle-type carbon nanotube. The bundle-type carbon nanotube refers to a carbon nanotube having a secondary shape in the form of a bundle or a rope in which or a plurality of carbon nanotubes are arranged or aligned in parallel in a predetermined direction, The bundle-type carbon nanotube has high dispersibility in a solvent compared to an entangled-type carbon nanotube having a secondary shape in the form of a sphere or a potato in which a plurality of carbon nanotubes are entangled without directionality, and thus, is suitable to be produced in the form of a dispersion. When the supported catalyst for producing carbon nanotubes of the present invention is used, the production of bundle-type carbon nanotubes may be more facilitated.

Hereinafter, the supported catalyst according to an embodiment of the present invention will be described in more detail.

**Carrier**

A carrier according to an embodiment of the present invention has a number average particle size ($D_{MN}$) of 1.5 um to 20 um. When a carrier having a particle size in the above range is applied, it is possible to prevent the aggregation between particles of a supported catalyst in which an active ingredient is supported, and to maximize the effective amount of the loading amount of the active ingredient.

Specifically, the number average particle size of the carrier may be 1.5 um to 20 um, preferably 4.0 um to 20 $\mu$m, and more preferably 4.0 $\mu$m to 19.0 um. When the number average particle size of a carrier is less than 1.5 um, particles of a supported catalyst are agglomerated together due to the cohesive force therebetween, and when greater than 20 $\mu$m, the effective amount of an active ingredient no longer increases, so that there may be a loss in a metal used as the active ingredient, and due to the non-uniformity of the active ingredient supported in the carrier, there may be an increase in production cost and a decrease in production yield. As the particle size distribution is more finely controlled in the above preferred range, the effective amount of the active ingredient supported in a carrier may be further increased.

The particle size distribution properties of the carrier may be directly reflected in a supported catalyst for producing carbon nanotubes, and the supported catalyst having such a particle size distribution may play a large role in improving the production yield of carbon nanotubes.

The carrier may include one or more selected from the group consisting of a magnesium oxide, a calcium oxide, an aluminum hydroxide, a zirconium oxide, and a silicon oxide, and preferably, may be an aluminum hydroxide, and more preferably, may include an aluminum hydroxide and further include one or more oxides selected from the group consisting of a zirconium oxide, a magnesium oxide, and a silicon oxide. When a carrier of the above type is used, it is advantageous in that the durability of the carrier is excellent and it is easy to support an active ingredient.

The shape of the carrier is not particularly limited, but may be spherical or potato-shaped. In addition, the carrier may have a porous structure, a molecular sieve structure, a honeycomb structure, and the like to have a relatively high surface area per unit mass or unit volume.

**Active ingredient**

The supported catalyst for producing carbon nanotubes according to an embodiment of the present invention is an active ingredient supported in a carrier, and the active ingredient may include a main catalyst component and a co-catalyst component.

The main catalyst component may be one or more selected from nickel, cobalt, and iron, and is particularly preferred to be cobalt. The main catalyst component directly lowers the activation energy of a reaction in which carbon nanotubes are synthesized from a carbon source gas, and thus, facilitates the carbon nanotube synthesis reaction, and when a main catalyst component of the above-described type is used, it is preferable in that a catalyst to be prepared has high activity and also secures durability of a certain level or higher.

The co-catalyst component may be one or more selected from molybdenum and vanadium, and is particularly preferred to be vanadium. The co-catalyst component serves to further enhance the catalytic activity of the main catalyst component, and when the co-catalyst component described above is used, a synergistic effect with the main catalyst component may be excellent, and agglomeration between main catalyst components during the production process may be prevented.

According to an embodiment of the present invention, a catalyst component in the supported catalyst for producing carbon nanotubes of the present invention may have the composition of Formula 1 below.

$$[\text{Formula 1}] \qquad (Ni, Co, Fe)_x (Mo, V)_y$$

In the above, x is a molar ratio of a main catalyst component, y is a molar ratio of a co-catalyst component, and the x and the y are each a real number in the range of $1 \leq x \leq 10$ and $0.1 \leq y \leq 10$, respectively.

Specifically, the molar ratio of the main catalyst component to the co-catalyst component may be 10:0.1 to 10:10, preferably 10:0.5 to 10:5. When the composition of an active ingredient is controlled to have such a molar ratio, it is possible to uniformly support the active ingredient in a carrier without agglomeration, while maintaining the activity of a supported catalyst at an excellent level.

According to an embodiment of the inventive concept, the supported catalyst may include an active ingredient in an amount of 5 wt% to 30 wt% based on the total weight of the supported catalyst, preferably 10 wt% to 30 wt%, and more preferably 15 wt% to 30 wt%. The content of the active ingredient at this time may mean an effective amount of a catalyst component substantially participating in the synthesis of carbon nanotubes, and in order to have such an effective amount, it is necessary to apply a carrier which satisfies the particle size distribution described above, that is, a number average particle size and a volume average particle size in a specific range.

Preparation method of supported catalyst for producing carbon nanotubes

The present invention provides a method for preparing the above-described supported catalyst for producing carbon nanotubes. Specifically, the present invention provides a method for preparing a supported catalyst for producing carbon nanotubes, wherein the method includes supporting a catalyst solution in a carrier having a number average particle size ($D_{MN}$) of 1.5 um to 20 $\mu$m, and then firing the mixture at a temperature of 500°C to 800°C to prepare a supported catalyst.

The carrier used in the present invention has a number average particle size ($D_{MN}$) of 1.5 um to 20 um as described above, and a carrier satisfying the above number average particle size range may be obtained and used, or may be directly prepared and used. Particularly, carriers obtained or prepared are classified according to the particle size thereof through a classifier, and then only the carrier satisfying a number average particle size in the above range may be taken and used.

When a carrier is directly prepared, the carrier may be prepared through a step of heat treating aluminum hydroxide. In addition, before performing the heat-treatment step, a step of pre-treating the aluminum hydroxide ($Al(OH)_3$) may be performed first. The pre-treatment may be performed at 50°C to 150°C for 1 hour to 24 hours. When the pre-treatment is performed, remaining solvent or impurities, which may be present on the surface of aluminum hydroxide ($Al(OH)_3$), may be removed.

The aluminum hydroxide ($Al(OH)_3$) may have a porosity of 0.1 $cm^3/g$ to 1.0 $cm^3/g$, and a specific surface area of less than 1 $m^2/g$.

By performing the heat treatment, aluminum hydroxide is converted, so that it is possible to prepare a carrier containing 30 wt% or more of $AlO(OH)$ and 70 wt% or less of $Al(OH)_3$, specifically 40 wt% or more of $AlO(OH)$ and 60 wt% or less of $Al(OH)_3$, but not containing $Al_2O_3$. When the temperature is lower than the above-described temperature, aluminum hydroxide is not converted to $AlO(OH)$, and when the temperature is higher than the above-described temperature, aluminum hydroxide is converted, so that $Al_2O_3$ may be prepared. The heat-treatment may be performed in an air atmosphere. Meanwhile, the heat treatment step may be performed at 250°C to 500°C, more specifically 400°C to 500°C.

In the method for preparing a supported catalyst for producing carbon nanotubes of the present invention, the catalyst solution may be a mixture including a main catalyst precursor, a co-catalyst precursor, and an organic acid.

The catalyst solution includes a precursor of a main catalyst component and a precursor of a co-catalyst component, which are to be supported, and further includes an organic acid. An organic acid used in the present invention may be, for example, a multi-carboxylic acid, which is a compound containing one or more carboxyl groups, and as a complexing agent, has high solubility. suppresses precipitation, and facilitates the synthesis of a catalyst, and as an activator, increases the synthesis of carbon nanotubes. The multi-carboxylic acid may be one or more selected from a dicarboxylic acid, a tricarboxylic acid, and a tetracarboxylic acid, and may be, for example, a citric acid, an oxalic acid, a malonic acid, a succinic acid, a tartaric acid, or the like.

The organic acid may be included in an amount of 0.1 wt% to 1.5 wt% based on the total weight of the catalyst solution. When the above range is satisfied, the precipitation of metal components of the main catalyst and co-catalyst in the catalyst solution does not occur, and the generation of cracks in the following firing process may also be suppressed.

In addition, mixing may be appropriately performed in a molar ratio in the range of about 5:1 to 30:1 of the sum of the main catalyst precursor and the co-catalyst precursor to the organic acid, and when the above molar ratio is satisfied, it is possible to implement the bulk density of prepared carbon nanotubes at an excellent level.

The main catalyst precursor and the co-catalyst precursor may be used without particular limitation as long as they are compounds which may be respectively converted into a main catalyst component and a co-catalyst component through the following drying and firing processes. In the case of nickel, iron, and cobalt which are exemplified as preferred main catalyst components above, any of salts or oxides of these metal components, or compounds containing these metal components may be used as a main catalyst precursor, and more specifically, materials such as $Fe(NO_3)_2 \cdot 6H_2O$, $Fe(NO_3)_2 \cdot 9H_2O$, $Fe(NO_3)_3$, $Fe(OAc)_2$, $Ni(NO_3)_2 \cdot 6H_2O$, $Co(NO_3)_2 \cdot 6H_2O$, $Co_2(CO)_8$, $[Co_2(CO)_6(t\text{-}BuC{=}CH)]$, $Co(OAc)_2$, or the like may be used as a main catalyst precursor. In the case of molybdenum and vanadium which are exemplified as preferred co-catalyst components above, any of salts or oxides of these components, or compounds containing these components may be used as a co-catalyst precursor, and more specifically, materials such as $NH_4VO_3$, $(NH_4)_6Mo_7O_{24} \cdot 4H_2O$, $Mo(CO)_6$, $(NH_4)MoS_4$, or the like may be used as a co-catalyst precursor. When the above-exemplified materials are used as precursors, there is an advantage in that a main catalyst component and a co-catalyst component are smoothly supported.

A solvent of the catalyst solution is not particularly limited as long as it can dissolve the main catalyst precursor and the co-catalyst precursor described above, and it is preferable to use, for example, water.

In the method for preparing the supported catalyst for producing carbon nanotubes of the present invention, the supporting may further include, after uniformly mixing the carrier and the catalyst solution and before firing the mixture, a process of aging for a predetermined time. The mixing may be performed by rotation or stirring at a temperature of 45°C to 80°C. The aging may be performed for 3 minutes to 60 minutes.

When the catalyst solution is supported in the carrier, a process of drying may be further included before firing. The drying may be performed at 60°C to 200°C for 4 hours to 16 hours, and as a method of the drying, a typical drying method applied in the art, such as oven drying, vacuum drying, freeze drying, and the like may be applied.

An intermediate prepared through the above series of processes is obtained as a supported catalyst for producing carbon nanotubes through the following firing step. The firing may be performed at a temperature of 500°C to 800°C, preferably 600°C to 800°C, and when firing is performed in the temperature range, most of a main catalyst precursor and a co-catalyst precursor may be converted into a main catalyst component and a co-catalyst component.

The supported catalyst prepared through the above preparation method may be prepared as a supported catalyst in which the main catalyst component and the co-catalyst component of the catalyst solution are present in the state of being coated on the surface and pores of the carrier, and due to the characteristic particle size distribution of the carrier, most of coated active ingredients can act as an effective amount, so that the activity is excellent, and accordingly, the production yield of carbon nanotubes is expected to improve.

**Method for producing carbon nanotubes**

According to another aspect of the present invention, there is provided a method for producing carbon nanotubes using the above-described catalyst. Specifically, the present invention provides a method for producing carbon nanotubes, the method including injecting the above-described supported catalyst for producing carbon nanotubes, and carbon nanotubes for a bed into a fluidized bed reactor, and supplying a carbon source gas and a flowing gas to the fluidized bed reactor and then reacting the carbon source gas and the flowing gas to produce carbon nanotubes.

The supported catalyst for producing carbon nanotubes according to an embodiment of the present invention may be injected together with carbon nanotubes for a bed into a fluidized bed reactor, and then a carbon source gas and a flowing gas may be additionally supplied to the fluidized bed reactor to produce carbon nanotubes.

The carbon source gas is a carbon-containing gas which may be decomposed at a high temperature to form carbon nanotubes. Specific examples thereof may include various carbon-containing compounds such as aliphatic alkanes, aliphatic alkenes, aliphatic alkynes, aromatic compounds, and the like. More specifically, a compound of methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, acetaldehyde, and the like may be used.

The flowing gas is to impart fluidity to carbon nanotubes to be synthesized in a fluidized bed reactor and to catalyst particles, and a gas having high thermal stability without reacting with a carbon source gas or carbon nanotubes may be used. For example, nitrogen gas or an inert gas may be used as the flowing gas.

As the fluidized bed reactor, any fluidized bed reactor known to be used in the production of carbon nanotubes may be used without particular limitation.

**Carbon nanotube**

Carbon nanotubes produced through the method for producing carbon nanotubes of the present invention may be bundle-type carbon nanotubes, and may have a n umber average particle size of 0 um to 500 um, preferably 40 um to 300 $\mu$m, and more preferably 40 um to 200 $\mu$m.

The carbon nanotubes may have a bulk density of 10 $kg/m^3$ to 80 $kg/m^3$, specifically 20 $kg/m^3$ to 80 $kg/m^3$, and more specifically 20 $kg/m^3$ to 40 $kg/m^3$. In addition, the carbon nanotubes may have a tap density of 15 $kg/m^3$ to 100 $kg/m^3$, specifically 30 $kg/m^3$ to 80 $kg/m^3$, and more specifically 35 $kg/m^3$ to 70 $kg/m^3$. Carbon nanotubes satisfying the above range may have excellent conductivity and excellent dispersibility while maintaining the original shape thereof, and may be advantageous for the preparation of highly concentrated dispersions.

The tap density of the carbon nanotubes may be measured using a typical tap density measuring device. Specifically, the tap density may be measured in accordance with ASTM B527-06 standards, and may be measured, for example, using TAS-2S of Logan Co., Ltd.

In addition, the tap density of the carbon nanotubes may be measured in accordance with a laboratory scale, and even when measured in accordance with a laboratory scale, results which are substantially the same as the results based on the above standards may be derived. There may be various measurement methods in accordance with a laboratory scale. For example, a 5 m$\ell$ cylinder is first placed on a scale, and then the scale is set to zero, and then 5 m$\ell$ of carbon nanotubes are put into the cylinder. The volume is measured by reading the scale at an eye level which is the same as the height of the carbon nanotubes, and then the cylinder is placed on the scale to measure the weight of the carbon nanotubes. The cylinder is lightly tapped on the floor about 100 times, and then the volume of the carbon nanotubes is measured by reading the scale. Then, by dividing the weight of the carbon nanotubes by the volume of the carbon nanotubes after 100 times of tapping, the tap density (the weight of the carbon nanotube (kg) / the volume of the carbon nanotube ($m^3$) after 100 times of tapping) may be measured.

The BET specific surface area of the carbon nanotubes may be 150 $m^2$/g to 300 $m^2$/g, and more specifically 160 $m^2$/g to 220 $m^2$/g. When the above range is satisfied, dispersion may be achieved at a high concentration. Specifically, in the present invention, the specific surface area of carbon nanotubes is measured by a BET method, and may be calculated from the adsorption amount of nitrogen gas under a liquid nitrogen temperature (77K) using Belsorp-mino II For example, Japan Co., Ltd.

Meanwhile, the average strand diameter of units of the carbon nanotubes may be 30 nm or less, specifically 10 nm to 30 nm, and the average length thereof may be 0.5 um to 200 um, specifically 10 um to 60 um. When the above range is satisfied, the units may have excellent electrical conductivity and strength, may be stable at both room temperature and high temperatures, and may also have excellent dispersibility.

The carbon nanotube unit may have an aspect ratio of 5 to 50,000, more specifically 10 to 20,000, which is defined as a ratio of the length (the length of a long axis passing through the center of the unit) and the diameter (the length of a short axis passing through the center of the unit and perpendicular to the long axis) of the carbon nanotube unit.

In the present invention, the average strand diameter and the length of the carbon nanotube units may be measured using a field emission radial scanning electron microscope.

## Examples

Hereinafter, the present invention will be described in more detail with reference to embodiments and experimental embodiments, but the present invention is not limited by the embodiments and experimental embodiments. The embodiments according to the present invention may be modified into other various forms, and the scope of the present invention should not be construed as being limited to the embodiments described below. The embodiments of the present invention are provided to describe the present invention more fully to those skilled in the art.

## Examples and Comparative Examples

As an aluminum-based support precursor, aluminum hydroxide (Al(OH)$_3$) was heat-treated at 450°C for 4 hours in an air atmosphere to prepare an aluminum-based carrier containing 40 wt% or more of AlO(OH). The prepared carrier was introduced to a classifier to obtain particles having a number average particle size of 4 um. Separately, NH$_4$VO$_3$ was dissolved in water, and then 0.44 mole of citric acid with respect to 1 mole of NH$_4$VO$_3$ was introduced thereto to prepare an NH$_4$VO$_3$ aqueous solution. Co(NO$_3$)$_2$·6H$_2$O and the NH$_4$VO$_3$ aqueous solution were mixed such that the molar ratio of Co:V was 10:1, and a catalyst solution, which was a clear aqueous solution, was prepared thereby.

The carrier and the catalyst solution were mixed such that Co and V in the catalyst solution were respectively 16 mole and 1.6 mole with respect to 100 mole of Al in the carrier.

The catalyst solution was supported in the carrier for 5 minutes in a constant temperature bath of 60°C, and then dried at 120°C for 6 hours in an air atmosphere. Thereafter, firing was performed thereon at 720°C for 1.5 hours in an air atmosphere to prepare a supported catalyst, and the content of an active ingredient supported at this time is shown in Table 1 below.

In addition, supported catalyst particles for producing carbon nanotubes of the rest of Examples and Comparative Examples were obtained in the same manner as the above, except that the number average particle size of the carrier and the content of a main catalyst component in the active ingredient were varied as shown in Table 1 below.

## Experimental Example 1. Yield and bulk density of carbon nanotubes

Production of carbon nanotubes

The prepared supported catalyst for producing carbon nanotubes was mounted in the middle section of a circular cylindrical quartz fluidized bed reactor having a diameter of 55 mm, and then heated to 670°C in a nitrogen atmosphere and maintained, and then nitrogen, hydrogen, and ethylene gases were supplied at a volume mixing ratio of 1:1:1 in a total of 300 sccm and reacted for 60 minutes to synthesize carbon nanotubes. The yield and bulk density of carbon nanotubes synthesized according to the supported catalysts of Examples and Comparative Examples were measured and are shown in Table 1 below.

Measurement methods

1) Number average particle size: The number average particle size of the prepared carrier was measured using a particle size analyzer (Microtrac, bluewave).
2) Yield: The yield was calculated according to Equation 1 below, based on the weight of the supported catalyst for producing carbon nanotubes used and an amount of increased weight after the reaction.

[Equation 1]

Yield (times) = (total weight after reaction - weight of catalyst used) / weight of catalyst used

3) Bulk density: The powder was filled in a 5 m$\ell$ container whose weight is known, and then weighed, and the density was calculated according to Equation 2 below.

[Equation 2]

Bulk density (kg/m$^3$)= weight of carbon nanotubes (kg) / volume of carbon nanotubes (m$^3$)

Measurement results

[Table 1]

| | Number average particle size | CNT yield | Bulk density |
|---|---|---|---|
| | $D_{MN}$ (PM) | Times | kg/m$^3$ |
| When the content (wt%) of main catalyst component (Co) is 13.5 wt% | | | |
| Comparative Example 1-1 | 1.4 | 15 | 12 |
| Example 1-1 | 4 | 19 | 18 |
| Example 1-2 | 19 | 20 | 22 |
| Comparative Example 1-2 | 24 | 19 | 25 |
| Comparative Example 1-3 | 50 | 20 | 25 |
| When the content (wt%) of main catalyst component (Co) is 15.8 wt% | | | |
| Comparative Example 2-1 | 1.4 | 18 | 15 |
| Example 2-1 | 4 | 38 | 32 |
| Example 2-2 | 19 | 31 | 27 |
| Comparative Example 2-2 | 24 | 23 | 32 |
| Comparative Example 2-3 | 50 | 25 | 30 |

(continued)

| When the content (wt%) of main catalyst component (Co) is 18.0 wt% | | | |
|---|---|---|---|
| Comparative Example 3-1 | 1.4 | 21 | 20 |
| Example 3-1 | 4 | 45 | 34 |
| Example 3-2 | 19 | 39 | 34 |
| Comparative Example 3-2 | 24 | 26 | 40 |
| Comparative Example 3-3 | 50 | 21 | 40 |
| When the content (wt%) of main catalyst component (Co) is 20.0 wt% | | | |
| Comparative Example 4-1 | 1.4 | 22 | 22 |
| Example 4-1 | 4 | 52 | 40 |
| Example 4-2 | 19 | 44 | 39 |
| Comparative Example 4-2 | 24 | 28 | 45 |
| Comparative Example 4-3 | 50 | 21 | 51 |

Referring to Table 1 above, in the case of Comparative Examples 1-1, 2-1, 3-1, and 4-1 having a number average particle size of 1.4 um, it is confirmed that the yield and bulk density thereof are lower than those of Examples respectively corresponding the Comparative Examples. It can be seen that this is the result of the degradation in activity to some degree caused by the agglomeration between supported catalyst particles due to a small number average particle size. In addition, when compared to Examples 1-2, 2-2, 3-2, and 4-2 in which the number average particle size of the carrier is 19 $\mu$m, which is 20 $\mu$m or less, in the case of Comparative Examples 1-2, 2-2, 3-2, and 4-2 in which the number average particle size of the carrier is 24 $\mu$m, and Comparative Examples 1-3, 2-3, 3-3, and 4-3 in which the number average particle size of the carrier is 50 $\mu$m, which is greater than 20 um, the CNT yield remains the same, or is rather reduced, even though the size of the catalyst particles was significantly increased. This means that when the number average particle size of a carrier becomes larger than the range of the present invention, the large particle size of the carrier acts as an obstacle to the supporting of an active ingredient, and thus, does not have a good effect on catalytic activity, and the supporting of an active ingredient is maximized within the carrier number average particle size range of the present invention, so that it is possible to prepare a supported catalyst having the best catalytic activity while minimizing the use of catalyst raw materials.

In addition, it was confirmed that when the main catalyst component was supported by increasing the content thereof in Examples, as the content of the main catalyst component to be supported was increased, the production yield continued to increase, and accordingly, the bulk density was also increased, but in Comparative Examples, even when the content of the main catalyst component was increased, the yield was not significantly increased, but rather, in certain cases, the yield was rather decreased. This means that, as described above, the supporting of an active ingredient may be maximized within the carrier number average particle size range of the present invention, whereas in the case of Comparative Examples in which the carrier number average particle size range of the present invention was not satisfied, active ingredients were not uniformly distributed inside a carrier, and the active ingredients did not serve as an effective amount.

Through the above, it can be confirmed that the supported catalyst according to an embodiment of the present invention, that is, in the case of a supported catalyst utilizing a carrier having a number average particle size of 1.5 um to 20 $\mu$m, most active ingredients to be supported act as active ingredients, so that catalytic activity is improved, and that the prevention of aggregation effectively prevents the loss of activity, which contribute to the improvement of carbon nanotube production yield, and it can be also confirmed that such an increase in an effective amount is not achieved by increasing the content of active ingredients, but may be implemented only by applying a carrier having an appropriate particle size distribution.

**Claims**

1. A supported catalyst for producing carbon nanotubes comprising:

   a carrier having a number average particle size ($D_{MN}$) of 1.5 um to 20 um; and

an active ingredient supported in the carrier.

2. The supported catalyst of claim 1, wherein the number average particle size of the carrier is 4.0 um to 20 $\mu$m.

3. The supported catalyst of claim 1, wherein the number average particle size of the carrier is 4.0 to 19 $\mu$m.

4. The supported catalyst of claim 1, wherein the active ingredient is included in an amount of 5 wt% to 30 wt% based on the total weight of the supported catalyst for producing carbon nanotubes.

5. The supported catalyst of claim 1, wherein:

   the active ingredient comprises a main catalyst component and a co-catalyst component; and
   the molar ratio of the main catalyst component to the co-catalyst component is 10:0.1 to 10:10.

6. The supported catalyst of claim 5, wherein the main catalyst component is one or more selected from nickel, cobalt, and iron.

7. The supported catalyst of claim 5, wherein the co-catalyst component is one or more selected from molybdenum and vanadium.

8. The supported catalyst of claim 1, wherein the supported catalyst is used in the production of bundle-type carbon nanotubes.

9. A method for producing carbon nanotubes comprising:

   injecting the supported catalyst for producing carbon nanotubes according to claim 1, and carbon nanotubes for a bed into a fluidized bed reactor; and
   supplying a carbon source gas and a flowing gas to the fluidized bed reactor and then reacting the carbon source gas and the flowing gas to produce carbon nanotubes.

10. The method of claim 9, wherein the carbon nanotubes are bundle-type carbon nanotubes.

## INTERNATIONAL SEARCH REPORT

| International application No. |
|---|
| **PCT/KR2021/018551** |

**A. CLASSIFICATION OF SUBJECT MATTER**

**B01J 37/02**(2006.01)i; **B01J 23/84**(2006.01)i; **B01J 23/881**(2006.01)i; **B01J 23/882**(2006.01)i; **B01J 23/883**(2006.01)i; **B01J 23/847**(2006.01)i; **C01B 32/162**(2017.01)i

According to International Patent Classification (IPC) or to both national classification and IPC

**B. FIELDS SEARCHED**

Minimum documentation searched (classification system followed by classification symbols)

B01J 37/02(2006.01); B01J 23/755(2006.01); B01J 31/32(2006.01); B01J 35/02(2006.01); B01J 37/04(2006.01); B01J 37/08(2006.01); B82Y 40/00(2011.01); C01B 31/02(2006.01); C01B 32/162(2017.01); G01N 27/72(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nano tube), 촉매(catalyst), 담지체(support), 수평균 입도 (number average particle size)

**C. DOCUMENTS CONSIDERED TO BE RELEVANT**

| Category* | Citation of document, with indication, where appropriate, of the relevant passages | Relevant to claim No. |
|---|---|---|
| X | JP 2019-005721 A (TOYO INK SC HOLDINGS CO., LTD.) 17 January 2019 (2019-01-17) See paragraphs [0033], [0034], [0044]-[0047], [0063], [0158], [0160], [0168] and [0172]; and table 3. | 1-8 |
| Y | | 9,10 |
| Y | KR 10-2016-0036910 A (LG CHEM, LTD.) 05 April 2016 (2016-04-05) See paragraphs [0051] and [0071]. | 9,10 |
| A | KR 10-2014-0037441 A (HANWHA CHEMICAL CORPORATION) 27 March 2014 (2014-03-27) See paragraph [0020]. | 1-10 |
| A | JP 2008-521008 A (HONDA MOTOR CO., LTD.) 19 June 2008 (2008-06-19) See paragraph [0035]. | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 March 2022** | **16 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/018551**

### C. DOCUMENTS CONSIDERED TO BE RELEVANT

| Category* | Citation of document, with indication, where appropriate, of the relevant passages | Relevant to claim No. |
|---|---|---|
| A | KR 10-2014-0140530 A (LG CHEM, LTD.) 09 December 2014 (2014-12-09)<br>See paragraphs [0044] and [0045]; and table 2. | 1-10 |
| PX | KR 10-2021-0036725 A (LG CHEM, LTD.) 05 April 2021 (2021-04-05)<br>See paragraphs [0078], [0085] and [0108]. | 1-10 |

Form PCT/ISA/210 (second sheet) (July 2019)

INTERNATIONAL SEARCH REPORT
Information on patent family members

International application No.

**PCT/KR2021/018551**

| Patent document cited in search report | | | Publication date (day/month/year) | Patent family member(s) | | | Publication date (day/month/year) |
|---|---|---|---|---|---|---|---|
| JP | 2019-005721 | A | 17 January 2019 | None | | | |
| KR | 10-2016-0036910 | A | 05 April 2016 | KR | 10-1781252 | B1 | 22 September 2017 |
| KR | 10-2014-0037441 | A | 27 March 2014 | CN | 104640633 | A | 20 May 2015 |
| | | | | EP | 2897727 | A1 | 29 July 2015 |
| | | | | EP | 2897727 | A4 | 15 June 2016 |
| | | | | JP | 2015-533638 | A | 26 November 2015 |
| | | | | KR | 10-1446116 | B1 | 06 October 2014 |
| | | | | KR | 10-1608477 | B1 | 04 April 2016 |
| | | | | KR | 10-2014-0043772 | A | 10 April 2014 |
| | | | | US | 2015-0224479 | A1 | 13 August 2015 |
| | | | | WO | 2014-046471 | A1 | 27 March 2014 |
| JP | 2008-521008 | A | 19 June 2008 | JP | 2012-111690 | A | 14 June 2012 |
| | | | | JP | 4939431 | B2 | 23 May 2012 |
| | | | | JP | 5466223 | B2 | 09 April 2014 |
| | | | | US | 2006-0104889 | A1 | 18 May 2006 |
| | | | | US | 2010-0239489 | A1 | 23 September 2010 |
| | | | | US | 7719265 | B2 | 18 May 2010 |
| | | | | US | 8012447 | B2 | 06 September 2011 |
| | | | | WO | 2006-137942 | A2 | 28 December 2006 |
| | | | | WO | 2006-137942 | A3 | 22 November 2007 |
| KR | 10-2014-0140530 | A | 09 December 2014 | KR | 10-1571254 | B1 | 23 November 2015 |
| | | | | KR | 10-2013-0007882 | A | 21 January 2013 |
| KR | 10-2021-0036725 | A | 05 April 2021 | None | | | |

**REFERENCES CITED IN THE DESCRIPTION**

**Patent documents cited in the description**

- KR 1020200173605
- KR 1020100074002 A